Europäisches Patentamt

European Patent Office

Office européen des brevets

(19)

(11) Veröffentlichungsnummer: **0 286 866 B1**

# EUROPÄISCHE PATENTSCHRIFT

(12)

(45) Veröffentlichungstag der Patentschrift: **16.09.92**

(51) Int. Cl.⁵: **H01G 9/05**

(21) Anmeldenummer: **88104370.7**

(22) Anmeldetag: **18.03.88**

(54) **Festelektrolytkondensator.**

(30) Priorität: **09.04.87 DE 3711973**

(43) Veröffentlichungstag der Anmeldung:
**19.10.88 Patentblatt 88/42**

(45) Bekanntmachung des Hinweises auf die
Patenterteilung:
**16.09.92 Patentblatt 92/38**

(84) Benannte Vertragsstaaten:
**DE FR GB**

(56) Entgegenhaltungen:
**US-A- 3 316 133**
**US-A- 3 627 520**

**INDUSTRIAL ELECTRONICS, April 1964, Seiten 195-198, London, GB; "Solid tantalum capacitor production"**

(73) Patentinhaber: **SIEMENS AKTIENGESELL-SCHAFT**
**Wittelsbacherplatz 2**
**W-8000 München 2(DE)**

(72) Erfinder: **Hohbach, Kai-Uwe, Dipl.-Phys**
**Birkenweg 28**
**W-7915 Oberelchingen(DE)**

**Beschreibung**

Die Erfindung betrifft einen Festelektrolytkondensator mit einem als Anode dienenden Sinterkörper aus einem Ventilmetall, das mit einer dielektrisch wirksamen Oxidschicht überzogen ist, einem als Kathode dienenden halbleitenden Elektrolyt und einer Kathodenkontaktierung, die durch einen leitfähigen Lack gebildet wird. Sie betrifft ferner ein Verfahren zur Herstellung eines solchen kondensators, gemäß dem Oberbegriff des Patentanspruchs 7.

In der FIG 1 ist der Schnitt durch einen derartigen Kondensator dargestellt, wie er z.B. aus der DE-A-1 114 936 bekannt ist. Zur Bildung des Anodenkörpers 1 werden pulverförmige Körner eines Ventilmetalls 2, z.B. Tantal, verpreßt und durch eine Wärmebehandlung zusammengesintert. Dieser Sinterkörper wird einer Formierbehandlung unterzogen, wodurch sich auf der Oberfläche der Ventilmetallkörner 2 eine dielektrisch wirksame Oxidschicht 3, z.B. $Ta_2O_5$ bei einem Tantal-Kondensator, bildet.

Auf diesem derart formierten Körper wird dann die Kathode aus einem halbleitenden Elektrolyt 4, z.B. $MnO_2$, gebildet, indem der formierte Körper beispielsweise in eine Metall-Salz-Lösung getaucht wird, worauf der halbleitende Elektrolyt durch Pyrolyse erzeugt wird. Die Herstellung der Kathode erfolgt dabei im allgemeinen in mehreren gleichartigen Verfahrensschritten.

Zur Kathodenkontaktierung dient eine Leitlackschicht 6, wobei üblicherweise für einen besseren Stromübergang eine Graphitschicht 5 zwischen Leitlackschicht 6 und Kathode 4 angeordnet ist. Die Anodenkontaktierung geschieht durch einen eingepreßten und eingesinterten Draht 7 aus einem Ventilmetall.

Derartige Kondensatoren besitzen einen ESR (Ersatzserienwiderstand), der sich aus drei Komponenten zusammensetzt:

a) dielektrische Verluste,
b) Widerstand des halbleitenden Elektrolyten zwischen den einzelnen Ventilmetallkörnern und
c) Kontaktierung der beschichteten Anode.

Während die unter a) angeführten dielektrischen Verluste materialbedingt sind, lassen sich die unter b) und c) angeführten Komponenten durch unterschiedliche Formgebung der Anodenform beeinflussen.

In einem vereinfachten Modell soll im folgenden ein qualitativer Vergleich verschiedener Anodenformen behandelt werden.

Der Widerstand zwischen Leitlack und Anode setzt sich aus vielen parallelen Widerständen zusammen, die von jedem Punkt auf der Leitlackoberfläche über die Kanäle mit dem halbleitenden Elektrolyten zu jedem Punkt des Sinterkörpers führen.

Stellvertretend für diese vielen Punkte soll nun ein zentraler Punkt (ZP) im Inneren des Sinterkörpers herausgegriffen werden. Ebenso soll die Leitlackoberfläche mit Punkten gleichen Abstandes a markiert werden, wobei dies einer Zuordnung von einem Punkt stellvertretend für ein Leitlackflächenstück bestimmter Größe entspricht.

Der elektrische Widerstand berechnet sich mit

$$1/R_n = \sum_i 1/R_i,$$

wobei $R_n$ der vereinfachte ESR ist und als Testwert ein Widerstand von 1 Ohm/cm angenommen wurde.

Bei zweidimensionaler Betrachtung ergeben sich mit einigen im folgenden angeführten einfachen Anodengeometrien gleicher Fläche ($\triangleq$ gleiches Volumen) folgende Werte für den ESR.

In der FIG 2 ist eine normale Anodenform dargestellt, bei der Höhe, Breite und Tiefe etwa gleich sind. Der Abstand a wurde mit 1,5 cm festgelegt. Damit ergibt sich für den ESR folgendes:

$1/R_1 = (4/1,5 + 4/2,12)/Ohm = 4,55/Ohm,$

woraus sich für $R_1 = 0,22$ Ohm ergeben.

In der FIG 3 ist ein langer dünner bzw. breiter schmaler Anodenkörper dargestellt, der auch für Festelektrolytkondensatoren Verwendung findet. Hierfür ergibt sich, bei gleichem Abstand a, ein ESR $R_2 = 0,16$ Ohm.

In der FIG 4 ist eine weitere Anodenform dargestellt, die einen kreuzförmigen Anodenkörper besitzt, der ebenfalls aus dem Stand der Technik bekannt ist. Bei dieser Form ergibt sich ein ESR $R_3 = 0,12$ Ohm.

Durch entsprechende Formgebung des Anodenkörpers läßt sich somit der ESR um einen Faktor von etwa 2,5 verringern.

Wie gezeigt wurde, läßt sich durch die äußere Form der ESR senken. Für den elektrischen Widerstand der Körper ist im wesentlichen wichtig, wie viele Punkte auf dem Leitlack existieren ( = Leitlackkontaktfläche) und wie nahe die Punkte am Körperzentrum sind.

Um einen Anhaltspunkt für die minimale Oberfläche einer zylindrischen Anode zu erhalten, kann der Wert F/V (Oberfläche/Volumen) herangezogen werden.

$$(F/V)_{min} = 5{,}54/V^{1/3} \ (mm^{-1}).$$

Beispielsweise bei V = 100 mm$^3$ folgt daraus $(F/V)_{min}$ = 1,19 mm$^{-1}$•

Für eine längliche Anode mit Ø: h = 1:2 ergibt sich F/V = 1,26 mm$^{-1}$ (+ 6 % zusätzliche Leitlackfläche) und bei Ø: h = 1:4 wird F/V = 1,36 mm$^{-1}$ (+ 14 %).

Für eine kreuzförmige Anode wird F/V = 1,6 mm$^{-1}$ (+ 35 %).

Dieses kann gut zum qualitativen Vergleich zweier Tantalkondensatoren herangezogen werden (mehr Leitlackfläche = kleinerer ESR).

Es hat sich jedoch gezeigt, daß für Geräte mit immer höherer Leistungsdichte Bauelemente mit noch geringeren elektrischen Verlusten (Wärmeentwicklung !) benötigt werden. Beispielsweise werden für Schaltnetzteile Kondensatoren gebraucht, die ab 100 kHz einen möglichst geringen ESR aufweisen.

Aufgabe der Erfindung ist es daher, den eingangs angeführten Festelektrolytkondensator derart weiterzubilden, daß der ESR weitergehend verringert wird.

Diese Aufgabe wird erfindungsgemäß dadurch gelöst, daß der Sinterkörper Hohlräume aufweist, die vor der Beschichtung mit dem halbleitenden Elektrolyt und der Kathodenkontaktierung einen mittleren Durchmesser von ca. 0,1 bis ca. 3 mm besitzen. Bezüglich des Verfahrens wird die Aufgabe durch die Merkmale des kennzeichnenden Teils von Anspruch 7 gelöst.

Die Hohlräume weisen vorzugsweise entweder annähernd eine sphärische Form mit einem mittleren Durchmesser von ca. 0,5 bis ca. 1 mm oder eine schlauchartige Form mit einer Länge bis ca. 10 mm auf. Der Anteil der Hohlräume am Gesamtvolumen des Sinterkörpers beträgt vorteilhaft ca. 10 bis ca. 75 Vol.-%.

Durch diese großporige Ausgestaltung des Sinterkörpers wird es ermöglicht, daß Hohlräume auch nach dem Beschichten mit dem halbleitenden Elektrolyt zurückbleiben, wodurch ein Eindringen des Leitlacks in den Sinterkörper selbst ermöglicht wird. Hierdurch wird sowohl die Leitlackfläche als auch die Entfernung des Leitlacks zum Zentrum des Sinterkörpers verbessert, so daß die erfindungsgemäße Ausgestaltung nicht nur eine größere Leitlackkontaktfläche zur Folge hat, sondern auch geringere Wege des elektrischen Stroms im halbleitenden Elektrolyt mit sich bringt.

Der Kondensator nach der Erfindung wird besonders vorteilhaft dadurch hergestellt, daß dem zur Bildung des Anodenkörpers dienenden Ventilmetallpulver Kampferkörner eines mittleren Durchmessers zwischen ca. 0,1 und 3,0 mm, vorzugsweise ca. 0,5 bis 1,0 mm oder Kampferfäden eines mittleren Durchmessers von ca. 0,1 bis ca. 3,0 mm und einer Länge bis ca. 10 mm, zugegeben werden, daß dieses Gemenge zu Anodenkörpern verpreßt wird, und daß durch anschließendes Erhitzen der Kampfer ausgedampft wird, wodurch Hohlräume im Preßkörper verbleiben.

Aus der DE-26 10 224-A1 ist es zwar bekannt, Kampferpulver als sogenannte Preßhilfe (Gleitmittel) bei der Herstellung von Anodenkörpern für Elektrolytkondensatoren zu verwenden, jedoch liegt hierbei der mittlere Durchmesser der Kampferkörner im Mikrometerbereich, so daß wesentliche Hohlräume im Sinterkörper nicht vorhanden sind.

Im folgenden werden die Vorteile eines Kondensators gemäß der Erfindung anhand von Meßwerten aufgezeigt.

In den dazugehörenden Zeichnungen zeigen

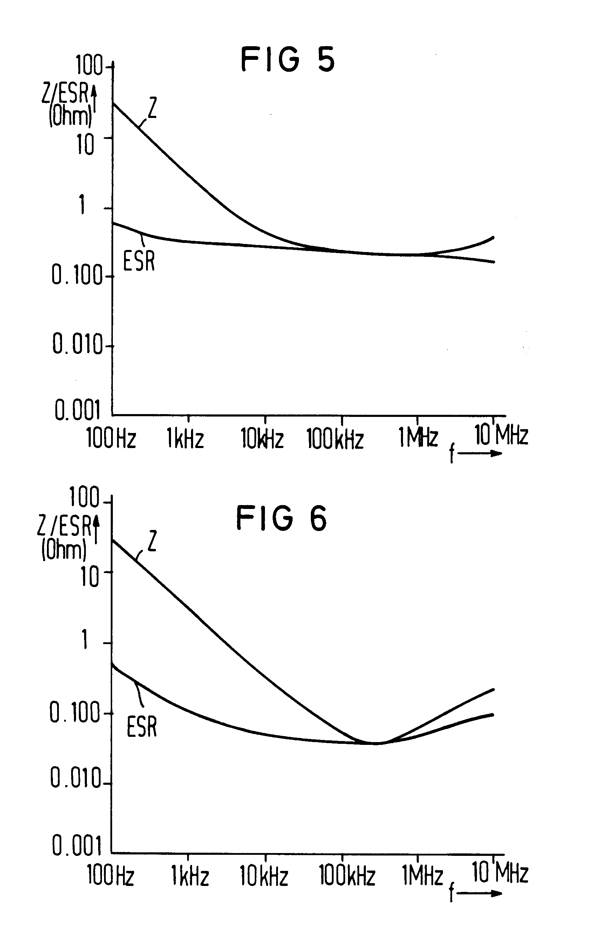

FIG 5 die Z/ESR-Kurve eines herkömmlichen 56 μF/15V-Kondensators,

FIG 6 die Z/ESR-Kurve eines 56 μF/15V-Kondensators mit großporiger Anode,

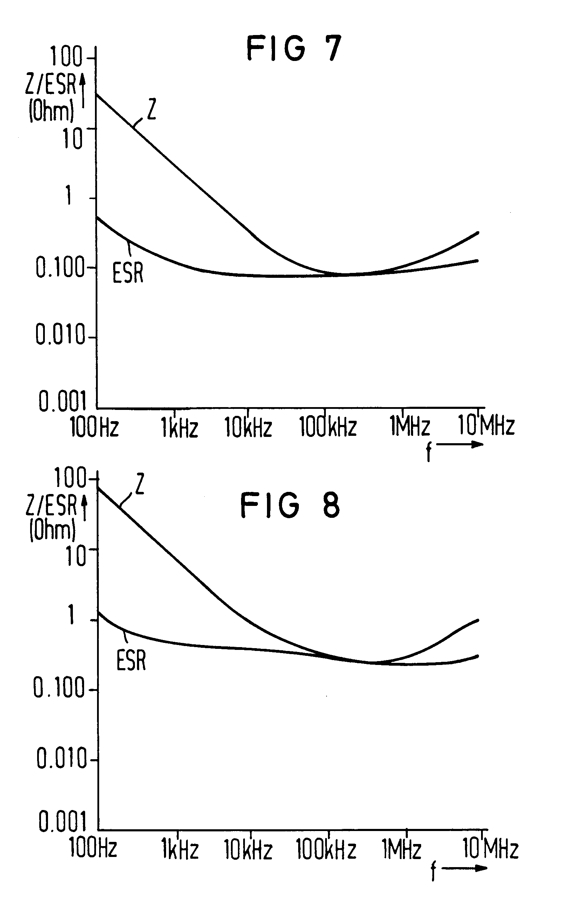

FIG 7 die Z/ESR-Kurve eines herkömmlichen 56 μF/15V-Kondensators mit kreuzförmiger Anode,

FIG 8 die Z/ESR-Kurve eines herkömmlichen 20 μF/20V-Kondensators,

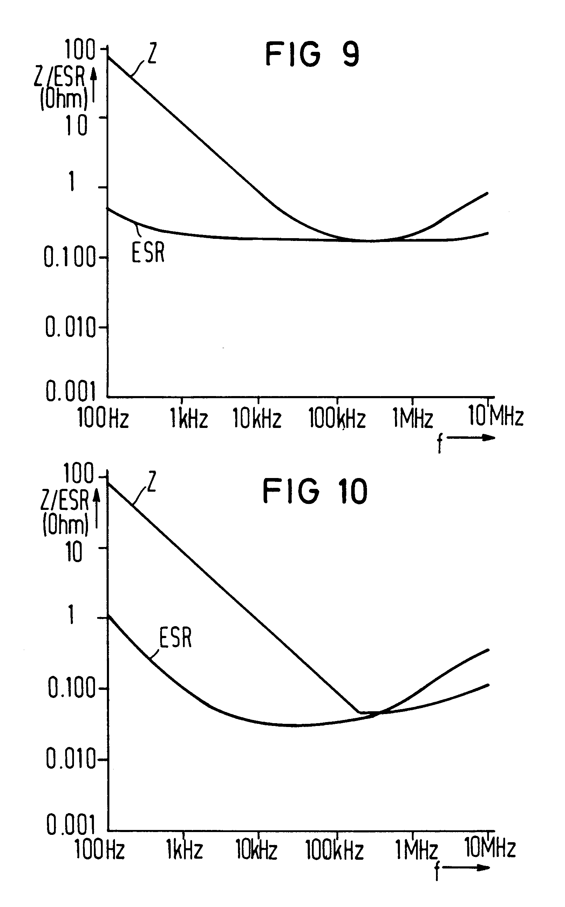

FIG 9 die Z/ESR-Kurve eines herkömmlichen 20 μF/20V-Kondensators mit flacher Anode,

FIG 10 die Z/ESR-Kurve eines 20 μF/20V-Kondensators mit großporiger Anode und

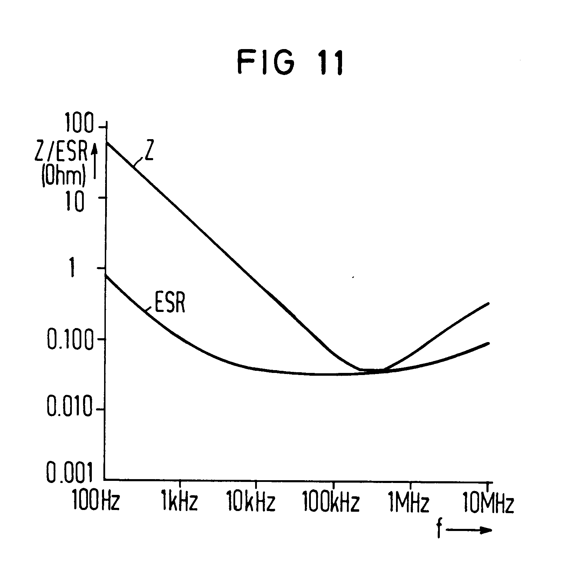

FIG 11 die Z/ESR-Kurve eines 27 μF/15V-Kondensators mit Anoden hoher Porendichte.

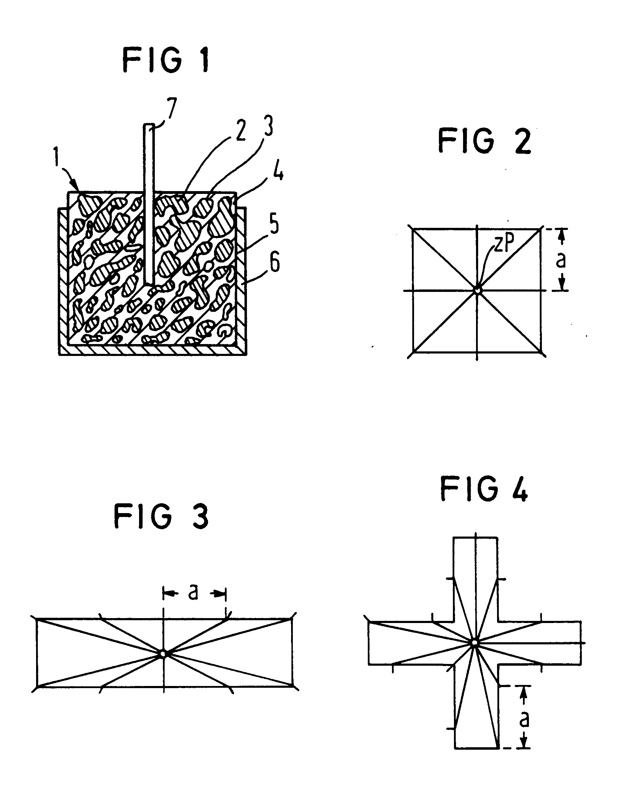

In der Kurve 5 ist der ESR/Z (Scheinwiderstand)-Verlauf über der Frequenz gezeigt, der von einem herkömmlichen 56 μF/15V-Kondensator mit einer Anodenform nach FIG 2 erreicht wird. Der ESR bei 100 kHz beträgt 221 mOhm und sinkt noch knapp unter 200 mOhm bei höheren Frequenzen.

In der FIG 6 sind die Meßwerte eines Kondensators mit gleichen Nenndaten und gleicher Anodenform wie in FIG 5 dargestellt, bei dem jedoch der Anodenkörper nach der Erfindung mit Hohlräumen ausgestaltet war. Der ESR liegt von 10 kHz bis 1 MHz deutlich unter 50 mOhm, von 100 kHz bis 400 kHz sogar unter 40 mOhm.

Somit unterschreiten die Z/ESR eines Kondensators nach der Erfindung sogar noch die in der FIG 7 dargestellten Z/ESR-Werte eines 56 μF/15V herkömmlichen Kondensators mit kreuzförmiger Anode, bei dem der ESR zwischen 10 kHz bis 1 MHz bei ca. 80 mOhm liegt.

Ein qualitativer Vergleich mit dem eingehend geschilderten Modell und den Meßwerten aus FIG 5 und 7 zeigt eine durchaus brauchbare Übereinstimmung im Verhältnis der angegebenen ESR-Werte für die modellmäßige Berechnung (theoretisch 220:120, experimentell 220:77). Die Abweichung wird darauf zurückgeführt, daß die in FIG 4 dargestellte Kreuzform nicht genau mit der am Kondensator nach FIG 7 gemessenen übereinstimmt.

Weiterhin zeigt die FIG 8 die Z/ESR-Kurve eines herkömmlichen 20 μF/20V-Kondensators mit Anodenform nach FIG 2, während in FIG 9 die Z/ESR-Kurve eines herkömmlichen 20 μF/20 V-Kondensators mit flacher Anodenform gemäß FIG 3 angeführt ist. Dem theoretischen Verhältnis der ESR-Werte von 220:160 steht ein gemessenes von 256:167 gegenüber, was ebenfalls auf die nicht vollständige Übereinstimmung der Anodenformen gemäß FIG 3 und FIG 9 zurückgeführt wird.

In der FIG 10 ist die Z/ESR-Kurve eines 20 μF/20 V-Kondensators mit Anodenform gemäß FIG 2 jedoch großporiger Anode wiedergegeben. Dieser Kondensator erreicht einen ESR-Wert von 29 mOhm bei 20 kHz, wogegen der Standardkondensator gemäß FIG 8 einen um das 10fache höheren ESR-Wert besitzt.

In der FIG 11 ist schließlich ein Kondensator der Nennwerte 27 μF/15 V dargestellt, der eine Anode hoher Porendichte und einer Anodenform gemäß FIG 2 besitzt.

In der folgenden Tabelle ist eine Zusammenfassung der wichtigsten Meßwerte vorgenommen.

| | ESR (mOhm) | | Z (mOhm) |
|---|---|---|---|
| | 20 kHz | 100 kHz | 100 kHz |
| FIG 5 | 260 | 221 | 228 |
| FIG 6 | 45 | 37 | 48 |
| FIG 7 | 76 | 77 | 81 |
| FIG 8 | 323 | 256 | 283 |
| FIG 9 | 175 | 167 | 182 |
| FIG 10 | 30 | 34 | 82 |
| FIG 11 | 34 | 33 | 63 |

Dieser Tabelle wie auch den Figuren ist zu entnehmen, daß die erfindungsgemäß ausgestalteten Kondensatoren nicht nur bessere ESR-Werte, sondern auch bessere Z-Werte besitzen.

Ebenso verbessert sich der Verlustfaktor tan $\delta$, z.B. tan $\delta_{1\ kHz}$ von ca. 10 % auf 3 bis 4 % (bei höheren Frequenzen noch günstiger), wodurch der Kondensator mit großporiger Anode eine höhere Güte Q erreicht.

Der Anteil der Hohlräume bei den Kondensatoren nach FIG 6 betrug ungefähr 30 Vol.-%, wogegen die Kondensatoren nach FIG 10 und 11 einen Anteil von etwa 50 Vol.-% aufwiesen. Zur Ermittlung dieser Porendichte wurden die großporigen Anoden und im Vergleich die Normalanoden gewogen und aus der Gewichtsdifferenz wurde auf das Volumenanteil der Poren geschlossen, wobei eine konstante Preßdichte vorausgesetzt wurde.

Weitere Vorteile der erfindungsgemäß ausgestalteten Kondensatoren bestehen darin, daß die großporigen Anoden mit höheren Spannungen formiert werden können, wobei die Formierspannung bei Normalanoden ca. 120 V, bei 30 Vol.-%-Hohlräumen ca. 135 V und bei 40 Vol.-%-Hohlräumen ca. 150 V betragen kann.

Weiterhin ist vorteilhaft, daß weniger Beschichtungsfolgen mit dem halbleitenden Elektrolyt erforderlich sind, da die großen Hohlräume als Mangan-Nitrat-Depots wirken.

Bei gleicher Preßdichte wurde in einigen Fällen auch eine Erhöhung des CV-Produkts beobachtet, was darauf zurückgeführt wird, daß durch die Makroporen zusätzlich freie Flächen auf dem Tantal entstehen.

**Patentansprüche**

1. Festelektrolytkondensator mit einem als Anode dienenden Sinterkörper aus einem Ventilmetall, das mit einer dielektrisch wirksamen Oxidschicht überzogen ist, einem als Kathode dienenden halbleitenden Elektrolyt und einer Kathodenkontaktierung, die durch einen leitfähigen Lack gebildet wird, **dadurch gekennzeichnet,** daß der Sinterkörper Hohlräume aufweist, die vor der Beschichtung mit dem halbleitenden Elektrolyt und der Kathodenkontaktierung einen mittleren Durchmesser von ca. 0,1 bis ca. 3 mm besitzen.

2. Festelektrolytkondensator nach Anspruch 1, **dadurch gekennzeichnet,** daß die Hohlräume annähernd sphärische Form besitzen.

3. Festelektrolytkondensator nach Anspruch 2, **dadurch gekennzeichnet,** daß der mittlere Durchmesser der Hohlräume ca. 0,5 bis ca. 1 mm beträgt.

4. Festelektrolytkondensator nach Anspruch 1, **dadurch gekennzeichnet,** daß die Hohlräume eine schlauchartige Form mit einer Länge bis ca. 10 mm besitzen.

5. Festelektrolytkondensator nach einem der Ansprüche 1 bis 4, **dadurch gekennzeichnet,** daß der Anteil der Hohlräume am Gesamtvolumen des Sinterkörpers ca. 10 bis ca. 75 Vol.-% beträgt.

6. Festelektrolytkondensator nach einem der Ansprüche 1 bis 5, **dadurch gekennzeichnet,** daß das Ventilmetall aus Tantal und der halbleitende Elektrolyt aus Mangandioxid bestehen.

7. Verfahren zum Herstellen eines Festelektrolytkondensators mit einem als Anode dienenden Sinterkörper aus einem Ventilmetall, das mit einer dielektrisch wirksamen Oxidschicht überzogen ist, einem als Kathode dienenden halbleitenden Elektrolyt und einer Kathodenkontaktierung, die durch einen leitfähigen Lack gebildet wird, **dadurch gekennzeichnet,** daß dem zur Bildung des Anodenkörpers dienenden Ventilmetallpulver Kampferkörner eines mittleren Durchmessers zwischen ca. 0,1 und ca. 3,0 mm, vorzugsweise ca. 0,5 bis ca. 1,0 mm oder Kampferfäden eines mittleren Durchmessers von ca. 0.1 bis ca. 3,0 mm und einer Länge bis ca. 10 mm, zugegeben werden, daß dieses Gemenge zu Anodenkörpern verpreßt wird, und daß durch anschließendes Erhitzen der Kampfer ausgedampft wird, wodurch Hohlräume im Preßkörper verbleiben.

**Claims**

1. Solid-electrolyte capacitor having a sintered body which serves as anode and is composed of a valve metal coated with a dielectrically active oxide layer, a semiconducting electrolyte, which serves as cathode, and a cathode contacting means formed by a conductive lacquer, characterised in that the sintered body has cavities which, before coating with the semiconducting electrolyte and the cathode contacting layer, have a mean diameter of approximately 0.1 to approximately 3 mm.

2. Solid-electrolyte capacitor according to Claim 1, characterised in that the cavities have an approximately spherical shape.

3. Solid-electrolyte capacitor according to Claim 2, characterised in that the mean diameter of the cavities is approximately 0.5 to approximately 1 mm.

4. Solid-electrolyte capacitor according to Claim 1, characterised in that the cavities have a tubular form with a length of up to approximately 10 mm.

5. Solid-electrolyte capacitor according to one of Claims 1 to 4, characterised in that the proportion of cavities in the total volume of the sintered body is approximately 10 to approximately 75 % by volume.

6. Solid-electrolyte capacitor according to one of Claims 1 to 5, characterised in that the valve metal is composed of tantalum and the semiconducting electrolyte of manganese dioxide.

7. Method of producing a solid-electrolyte capacitor having a sintered body which serves as anode and is composed of a valve metal coated with a dielectrically active oxide layer, a semiconducting electrolyte

which serves as cathode and a cathode contacting layer formed by a conductive lacquer, characterised in that camphor grains having a mean diameter of between approximately 0.1 and approximately 3.0 mm, preferably approximately 0.5 to approximately 1.0 mm, or camphor filaments having a mean diameter of approximately 0.1 to approximately 3.0 mm and a length of up to approximately 10 mm are added to the valve metal powder which serves to form the anode body, in that this mixture is compressed to form anode bodies, and in that the camphor is evaporated out by subsequent heating, with the result that cavities are left behind in the compact.

**Revendications**

1. Condensateur à électrolyte solide, comprenant une pièce frittée en un métal pour soupape, qui sert d'anode et qui est revêtue d'une couche d'oxyde à effet diélectrique, un électrolyte semiconducteur servant de cathode et un contact de cathode formé par un vernis conducteur, caractérisé en ce que la pièce frittée comporte des cavités qui possèdent, avant le revêtement par l'électrolyte semiconducteur et par le contact de cathode, un diamètre moyen de 0,1 à 3 mm environ.

2. Condensateur à électrolyte solide suivant la revendication 1, caractérisé en ce que les cavités ont une forme sensiblement sphérique.

3. Condensateur à électrolyte solide suivant la revendication 2, caractérisé en ce que le diamètre moyen des cavités est compris entre 0,5 et 1 mm environ.

4. Condensateur à électrolyte solide suivant la revendication 1, caractérisé en ce que les cavités ont une forme tubulaire d'une longueur allant jusqu'à 10 mm.

5. Condensateur à électrolyte solide suivant l'une des revendications 1 à 4, caractérisé en ce que les cavités représentent de 10 à 75 % environ du volume total de la pièce frittée.

6. Condensateur à électrolyte solide suivant l'une des revendications 1 à 5, caractérisé en ce que le métal pour soupape est en tantale et l'électrolyte semiconducteur en dioxyde de manganèse.

7. Procédé de fabrication d'un condensateur à électrolyte solide, comprenant une pièce frittée servant d'anode en métal pour soupape, qui est revêtue d'une couche d'oxyde à effet diélectrique, un électrolyte semiconducteur servant de cathode et un contact de cathode formé par un vernis conducteur, caractérisé en ce qu'il consiste à ajouter, à la poudre de métal pour soupape servant à former la pièce d'anode, des grains de camphre d'un diamètre moyen compris entre 0,1 et 3,0 mm environ et, de préférence, entre environ 0,5 jusqu'à 1,0 mm environ, ou des fils de camphre d'un diamètre moyen de 0,1 jusqu'à 3,0 mm environ et d'une longueur allant jusqu'à 10 mm environ, à comprimer cette masse en des pièces d'anode et à évaporer le camphre par chauffage ultérieur en laissant subsister des cavités dans la pièce comprimée.

FIG 1

FIG 2

FIG 3

FIG 4

FIG 5

FIG 6

FIG 7

FIG 8

EP 0 286 866 B1

FIG 9

FIG 10

# FIG 11